# DEMANDE DE BREVET EUROPEEN

(11) **EP 0 963 697 A1**
(43) Date de publication de la demande: **15.12.1999**
(21) Numéro de dépôt: 98450006.6
(22) Date de dépôt: 08.06.1998
(51) Int. Cl.: A21B 3/15

(54) **Dispositif interface pour filet de boulangerie**

(71) Demandeur: Cots, Patrick, 33140 Villenave d'Ornon (FR)
(72) Inventeur: Cots, Patrick, 33140 Villenave d'Ornon (FR)
(74) Mandataire: Thébault, Jean-Louis

(57) **Abrégé**

Dispositif pour filet de boulangerie comprenant un bâti (10) et une feuille mince comprenant des trous, conformée sensiblement suivant une sinusoïde pour former des canaux juxtaposés aptes à recevoir chacun un pain, ladite feuille comprenant éventuellement un revêtement anti-adhérent, caractérisé en ce qu'il comprend un profilé (24) ayant des qualités anti-adhérentes, prévu pour être rapporté dans au moins un des canaux, formant ainsi interface.

## Description

La présente invention concerne un dispositif applicable aux filets de boulangerie.

Dans le domaine de la boulangerie, les pâtons de pâte à pain sont mis en forme et disposés sur des filets pour attendre qu'ils lèvent. Ces filets comprennent un bâti support dont les dimensions sont prévues pour être compatibles avec les rayonnages des chambres de pousse ou des fours ainsi qu'une toile métallique rapportée sur ce bâti.

Cette toile métallique est de faible épaisseur pour permettre sa conformation suivant un profil donné. Ce profil est une sinusoïde régulière formant des canaux séparés les uns des autres, chacun de ces canaux étant prévu pour recevoir un pâton roulé en forme de pain allongé. La toile métallique est généralement une feuille métallique qui porte un grand nombre de trous suffisamment pour faire penser à une toile, le taux de vide pouvant atteindre 25%.

Le pâton étant cru, il a une forte tendance à coller sur tous les supports. Tous les autres dispositifs utilisés au cours de la fabrication, peseuse/diviseuse, balancelle, rouleuse, sont farinés pour éviter le collage ou revêtus de matériau à adhérence limitée tel que des polymères siliconés.

Pour la suite de la description, on entend par polymère siliconé également les matériaux équivalents dotés de qualité d'anti-adhérence comme des élastomères chargés par exemple.

Si la toile métallique est utilisée venue de fabrication, on s'aperçoit que les risques de collage sont tellement importants que, la plupart du temps, il est impossible de retirer le pain après cuisson.

Aussi la solution actuellement retenue est de déposer un revêtement siliconé sur la surface de ces toiles métalliques, généralement par pulvérisation. Chaque bâti avec sa toile est nettoyé, dégraissé et revêtu de d'un polymère siliconé par pulvérisation, sur des épaisseurs inférieures au dixième de millimètre, dans des installations adaptées car si le silicone est de qualité alimentaire au contact, il n'est pas particulièrement recommandé de l'ingérer en respirant.

On comprend que la fabrication de tels filets est déjà d'un prix de revient relativement élevé mais quand on sait que l'utilisation est prévue pour environ 18 mois avant entretien, on comprend que l'investissement est très lourd.

Lorsque le filet a subi des dégradations suffisantes pour provoquer des collages trop nombreux et répétitifs, le filet est envoyé dans une installation adaptée ou traité sur place lorsqu'il est fait appel à des prestataires équipés de moyens mobiles, pour assurer un décapage du revêtement mince de polymère siliconé, pour un dégraissage suivi d'une nouvelle pulvérisation. Le coût de cet entretien reste très élevé et la réaction est de retarder l'envoi.

De ce fait, lorsque la dégradation a débuté, le revêtement a tendance à s'écailler et surtout après amorçage, le détachement de particules est facilité et bien souvent des particules de polymère siliconé se collent à la pâte, suivent le pain après cuisson et se trouvent être ingérées par les consommateurs.

Une solution consiste aussi à huiler la toile métallique avant chaque dépôt de pâton pour éviter tout accrochage, mais la toile a tendance à s'encrasser rapidement, ce qui n'est pas particulièrement en accord avec les règles d'hygiène établies par les normes.

Pour les professionnels qui souhaitent au contraire entretenir régulièrement leurs filets par nettoyage généralement au nettoyeur à haute pression, on constate qu'ils sont pénalisés car le revêtement de polymère siliconé se décolle. En effet, d'une part les qualités d'accrochage sont limitées et d'autre part elles sont affectées par le vieillissement si bien que la fréquence d'entretien augmente.

De tels revêtements ont de toutes les façons une résistance limitée à l'abrasion, si bien que des zones se trouvent affectées dans tous les cas par l'usage.

On note aussi que, quelle qu'en soit la raison, dans le cas où une zone limitée en surface est affectée, la réparation de cette zone est impossible. Il est nécessaire de prévoir un traitement complet du filet, décapage, dégraissage et pulvérisation.

On connaît par la demande de brevet N°2 594 640 un matériel polyvalent de fermentation et de cuisson qui comprend un plateau à rebords latéraux avec une membrane interchangeable. Le problème est strictement identique à savoir qu'il faut traiter la totalité de la feuille lorsque celle-ci est dégradée. Le seul avantage est de ne pas avoir à traiter le plateau simultanément à la feuille.

La présente invention a pour but de remédier au problème des filets partiellement affectés par une dégradation du revêtement anti-adhérent et permet de poursuivre l'utilisation desdits filets tout en respectant les règles d'hygiène, qui autorise la remise à neuf du filet lorsque celui-ci est suffisamment affecté pour que cela en vaille la peine, qui permet de poursuivre le lavage périodique du filet, notamment au nettoyeur à haute pression.

A cet effet, le dispositif pour filet de boulangerie comprend un bâti et une feuille mince avec des trous, conformée sensiblement suivant une sinusoïde pour former des canaux juxtaposés aptes à recevoir chacun un pain, ladite feuille comprenant éventuellement un revêtement anti-adhérent, et se caractérise en ce qu'il comprend un profilé ayant des qualités anti-adhérentes, prévu pour être rapporté dans au moins un des canaux, formant ainsi interface.

Selon une autre caractéristique, le profilé est en matériau anti-adhérent dans la masse, ce peut être un polymère siliconé bicomposants.

Selon une autre caractéristique, il est prévu des moyens de fixation sur la feuille, comme par exemple des rivets prévus pour s'accrocher dans les trous de la feuille.

De façon préférentielle, le profilé comprend des trous sensiblement dans le même pourcentage que la feuille.

Le dispositif selon la présente invention est décrit ci-après selon un mode de réalisation particulier, non limitatif, en regard des dessins annexés dont les différentes figures représentent :
- figure 1, une vue en perspective d'un filet présentant des zones dégradées,
- figure 2, une vue de dessus du filet de la figure 1, montrant la faible surface dégradée,
- figure 3, une vue partielle en perspective dont les zones sont en cours de traitement avec le dispositif selon l'invention,
- figure 4, une vue en coupe transversale du filet de la figure 3 avec le dispositif selon l'invention en place.

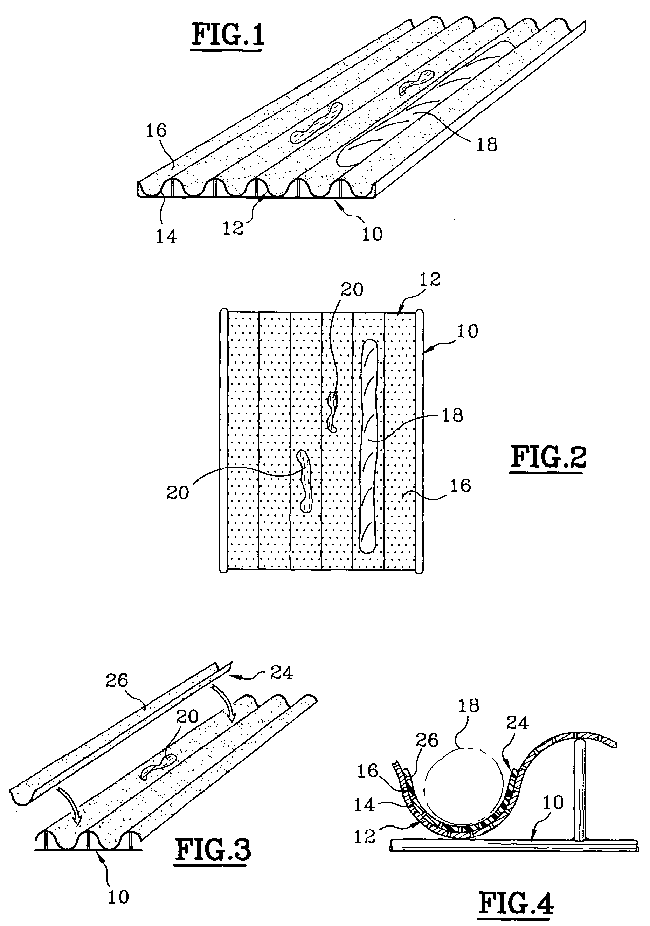

Sur la figure 1, on a représenté un bâti 10 support généralement réalisé en fil pour former un maillage conférant à l'ensemble la résistance mécanique nécessaire.

Sur ce bâti est disposée une feuille 12 métallique, dite toile dans le métier. Cette feuille est fixée de façon définitive et elle est conformée suivant un profil sinusoïdal définissant des canaux longitudinaux dimensionnés pour recevoir les pains prévus.

Cette feuille est perforée avec un taux de vide important de l'ordre de 25% minimum, pour situer l'ordre de grandeur, en sorte de permettre une répartition homogène de la chaleur et une évacuation de l'eau au cours de la cuisson.

Cette même feuille est recouverte d'un revêtement 14 anti-adhérent de type polymère siliconé qui est pulvérisé sur la toile, en couche très mince.

Ce revêtement 14 laisse libres les trous 16 réalisés dans la toile métallique, le diamètre des trous étant très supérieur à l'épaisseur dudit revêtement.

Ainsi qu'on peut le constater sur les figures 1 et 2, un pain 18 est déposé dans un des canaux et deux zones 20 sont représentées et schématisent la dégradation limitée en surface du revêtement dans deux des canaux. Ces dégradations sont néanmoins suffisantes pour que le pain accroche et colle à la toile.

La perte répétée sur plusieurs des filets en service conduit à une perte en fabrication inacceptable.

La présente invention consiste, ainsi que cela est indiqué sur la figure 3, à rapporter un profilé 24 amovible, en matériau anti-adhérent sur toute son épaisseur. Ce profilé est souple pour venir se plaquer dans un des canaux avec éventuellement un préformage. L'épaisseur de ce matériau est faible pour ne pas induire de capacité thermique supplémentaire préjudiciable à la cuisson du pain. De plus, ce profilé comprend également des perforations 26 pour les mêmes raisons que la toile.

Ce profilé n'a aucun rôle de support mécanique mais simplement celui d'interface entre le revêtement dégradé et le pain.

Le profilé est fixé dans le canal par tout moyen adapté tel que des rivets venant s'accrocher à travers les trous de la toile ou des clips aux extrémités.

Le matériau anti-adhérent dans la masse est avantageusement un polymère siliconé bicomposant tel que celui vendu dans le commerce sous la dénomination commerciale "ELASTOSIL" ou "RHODORSIL"

Comme cela est bien visible sur la coupe de la figure 4, le profilé est bien une interface en matériau anti-adhérent dans la masse.

Le fait que l'épaisseur, bien que faible, soit beaucoup plus importante que celle du revêtement, a pour intérêt de conférer à ces profilés une longévité accrue et une dégradation beaucoup plus lente dans la masse supprimant l'arrachage d'écailles de polymère. De plus, l'usure ne modifie pas les propriétés anti-adhérentes.

On peut donc réparer les canaux dégradés sans avoir à amener l'ensemble du filet à l'entretien, prolongeant ainsi la durée de vie dans des conditions d'hygiène adaptées. Le filet avec son ou ses profilé(s) rapporté(s) peut être lavé au nettoyeur à haute pression.

Lorsque le filet est suffisamment dégradé, on note que les profilés peuvent être très rapidement retirés puisque le moyen de fixation, rivet ou agrafe est aisément démontable par l'utilisateur lui-même.

On peut bien entendu prévoir un blocage mécanique sans élément rapporté par simple emboîtement des extrémités dans le bâti, le profilé étant alors tendu entre ses deux extrémités fixes.

Selon une variante de réalisation, le profilé peut avoir des dimensions et une conformation telles qu'il recouvre au moins deux canaux juxtaposés. Dans ce cas, le profilé peut être prévu pour recouvrir la totalité des canaux, donc toute la surface du filet.

Cette solution peut être envisagée pour le renouvellement d'un parc de filets ou pour la fabrication de nouveaux filets mais dans ce cas, la toile première ne comprend aucun revêtement par pulvérisation.

Le profilé est réalisé quant à lui, par tout moyen adapté tels que moulage, calandrage, extrusion, l'épaisseur étant de quelques dixièmes de millimètres, de préférence de 0.5 mm.

## Revendications

1. Dispositif pour filet de boulangerie comprenant un bâti (10) et une feuille (12) mince comprenant des trous (16), conformée sensiblement suivant une sinusoïde pour former des canaux juxtaposés aptes à recevoir chacun un pain (18), ladite feuille comprenant éventuellement un revêtement (14) anti-adhérent, caractérisé en ce qu'il comprend un profilé (24) ayant des qualités anti-adhérentes, prévu pour être rapporté sur le fond d'au moins un des canaux, formant ainsi interface.

2. Dispositif selon la revendication 1, caractérisé en ce que le profilé (24) est un profilé souple.

3. Dispositif selon la revendication 1 ou 2, caractérisé en ce que le profilé (24) est en matériau anti-adhérent dans la masse.

4. Dispositif selon la revendication 3, caractérisé en ce que le matériau anti-adhérent est un polymère siliconé bicomposants.

5. Dispositif selon l'une quelconque des revendications précédentes, caractérisé en ce que le profilé (24) comprend des moyens de fixation sur la feuille.

6. Dispositif selon la revendication 5, caractérisé en ce que les moyens de fixation comprennent des rivets prévus pour s'accrocher dans les trous (26) de la feuille.

7. Dispositif selon l'une quelconque des revendications précédentes, caractérisé en ce que le profilé (24) comprend des trous sensiblement dans le même pourcentage que la feuille.
